# EUROPÄISCHE PATENTSCHRIFT

(11) **EP 4 254 109 B1**
(45) Veröffentlichungstag und Bekanntmachung des Hinweises auf die Patenterteilung: **29.04.2026**
(21) Anmeldenummer: 22165002.1
(22) Anmeldetag: 29.03.2022
(51) Int. Cl.: G05B 23/02

(54) **ZUSTANDSBEWERTUNG EINES SYSTEMS**
SYSTEM STATE EVALUATION
ÉVALUATION DE L'ÉTAT D'UN SYSTÈME

(43) Veröffentlichungstag der Anmeldung: 04.10.2023
(73) Patentinhaber: Siemens Aktiengesellschaft, 80333 München (DE)
(72) Erfinder: Guo, Zhensheng, 85659 Forstern (DE); Rothbauer, Stefan, 86156 Augsburg (DE); Zeller, Marc, 81243 München (DE)
(74) Vertreter: Siemens Patent Attorneys

(56) Entgegenhaltungen:
- EP-A1- 2 950 176
- EP-A1- 3 945 383
- DE-A1- 102017 200 544

## Beschreibung

Die vorliegende Erfindung betrifft ein computerimplementiertes Verfahren zur Zustandsbewertung eines technischen Systems, eine Zustandsbewertungsvorrichtung zur Zustandsbewertung eines technischen Systems und ein Computerprogramm.

Viele Eigenschaften, insbesondere nichtfunktionale Eigenschaften, eines Systems sind diskret definiert, oftmals binär, beispielsweise ob ein System eine essentielle Funktion erfüllt, zum Beispiel sicher ist, oder nicht, also zum Beispiel unsicher ist. Die Nichterfüllung solcher Eigenschaften kann abhängig vom konkreten System und/oder Anwendungsfall verschiedene nachteilhafte Auswirkungen haben. Eine Trendanalyse und darauf aufbauend Prognose über die zukünftige Entwicklung einer binären oder diskreten Größe mit wenigen möglichen Werten ist daher oftmals nicht möglich.

Zur Ermittlung sogenannter RAMS (englisch: "reliability, availability, maintainability, and safety") wie Zuverlässigkeit oder Verfügbarkeit wird beispielsweise auf die korrekte Funktion des Systems zu einem gegebenen Zeitpunkt Bezug genommen. Die korrekte Funktion eines Systems ist entweder gegeben, das System funktioniert wie erwünscht, oder nicht gegeben, das System funktioniert nicht wie erwünscht.

Auf der Basis von binären Zuständen oder diskreten Zuständen mit wenigen Werten bestimmte Kennwerte sind schwer zu prognostizieren, da der Zustandswechsel unvermittelt und sprungartig erfolgt.

Ist beispielsweise die Zuverlässigkeit des Systems über einen definierten Zeitraum gefordert, ist es wünschenswert einen Zustandswechsel vom Zustand "System funktioniert" zum Zustand "System funktioniert nicht" prognostizieren zu können. Damit wäre es möglich, rechtzeitig gezielt Abhilfe zu schaffen, beispielsweise durch geeignete Maßnahmen wie einen Komponentenaustausch, ein Software-Update, ein Verlagern von Funktionalität auf Alternativsysteme, und so weiter.

Durch stochastische Ansätze wie Fehlerbäume oder Markov-Ketten kann die Wahrscheinlichkeit, dass ein bestimmtes Ereignis innerhalb eines festgelegten zukünftigen Zeitraumes eintritt abgeschätzt werden. Beispielsweise kann die zu erwartende Verfügbarkeit eines Systems auf Basis der Fehlerzusammenhänge zum Auftreten des Systemausfalls und Fehlerdaten zu den zugrunde liegenden Ereignissen berechnet werden. Die Ergebnisse solcher Berechnung sind jedoch rein stochastisch und berücksichtigen nicht den tatsächlichen Zustand des System, der jedoch wesentlich dafür ist, ob das Ereignis tatsächlich eintritt.

Die Druckschrift DE 10 2017 200 544 A1 betrifft ein Verfahren zur Bestimmung einer Vorlaufzeit für den Austausch eines optischen Rauchmelders. Es werden ein aktueller Wert für einen Verschmutzungsgrad des optischen Rauchmelders sowie fortlaufend weitere Werte für den Verschmutzungsgrad ermittelt. Die Vorlaufzeit wird basierend auf den bisherigen Werten für den Verschmutzungsgrad mittels einer Trendanalyse ermittelt.

Die Druckschrift EP 2 950 176 A1 offenbart ein Verfahren zur Generierung einer Ereignismeldung. Eine Automatisierungskomponente überwacht zumindest einen Zustandsparameter. Dabei wird für den Zustandsparameter zumindest ein Grenzwert definiert. Bei einer Verletzung des Grenzwertes wird die Ereignismeldung erzeugt.

Die Druckschrift EP 3 945 383 A1 offenbart ein Verfahren zur Überwachung und Steuerung eines Motors mit kontinuierlichem Durchfluss. Das Verfahren umfasst das Sammeln mehrerer aktueller Zustände mindestens eines Filters über einen Zeitraum von mindestens drei Tagen. Die gesammelten Zustände werden zur Überwachung des mindestens einen Filters verwendet.

Es ist eine Aufgabe der vorliegenden Erfindung, eine Möglichkeit zur Zustandsbewertung eines technischen Systems anzugeben, das durch einen diskreten Zustandsparameter charakterisierbar ist, sodass insbesondere eine verbesserte, insbesondere exaktere, Prognose betreffend den diskreten Zustandsparameter möglich wird.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf dem Gedanken, neben einem diskreten ersten Zustandsparameter, der N verschiedene diskrete Werte annehmen kann, einen zweiten Zustandsparameter zur Charakterisierung des Systems zu betrachten, der entweder ein kontinuierlicher Zustandsparameter ist oder M verschiedene diskrete Werte annehmen kann, wobei M größer ist als N. Der zweite Zustandsparameter ist dabei derart gewählt, dass sich aus ihm eindeutig der erste Zustandsparameter ergibt. Basierend auf einer Messung an dem System wird der zweite Zustandsparameter bestimmt und abhängig davon sowie abhängig von einem kritischen Wert für den ersten Zustandsparameter ein Bewertungskennwert zur Zustandsbewertung des technischen Systems berechnet.

Gemäß einem Aspekt der Erfindung wird ein computerimplementiertes Verfahren nach Anspruch 1 angegeben.

Sofern nicht anders angegeben, können alle Schritte des computerimplementierten Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen computerimplementierten Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Aus jeder Ausführungsform des erfindungsgemäßen computerimplementierten Verfahrens zur Zustandsbewertung eines technischen Systems folgt unmittelbar ein nicht vollständig computerimplementiertes Verfahren zur Zustandsbewertung eines technischen Systems, welches zusätzlich zu den Schritten des computerimplementierten Verfahrens auch die Erzeugung des Messergebnisses durch die Durchführung der wenigstens einen Messung an dem System, insbesondere mittels eines Messsystems, beinhaltet.

Das technische System kann beispielsweise eine Maschine oder Anlage oder mehrere physisch, virtuell und/oder funktional verbundene Maschinen und/oder Anlagen beinhalten. Beispielhafte aber nicht beschränkende Anwendungsgebiete sind System im Bereich der Energietechnik, etwa Anlagen und/oder Maschinen zur Energieerzeugung, zur Energieumwandlung und/oder zum Energietransport. Weitere nicht beschränkende Anwendungsgebiete liegen im Bereich der Mobilität, etwa im Eisenbahnverkehr, sodass das System beispielsweise Zugkomponenten, Zugmaschinen, Gleisanlagen oder Teile davon, Personenkraftwagen, Lastkraftwagen und so weiter beinhalten kann, im Bereich der Industrieproduktion, sodass das System beispielsweise Produktionsmaschinen oder -anlagen, Fertigungsmaschinen oder -anlagen, Testvorrichtungen, Überwachungsanlagen, Fördermaschinen oder -anlagen, verfahrenstechnische Anlagen und so weiter beinhalten kann. Weitere nicht beschränkende Anwendungsgebiete liegen im Bereich der Medizintechnik, sodass das System beispielsweise Vorrichtungen zur medizinischen Bildgebung, etwa MRT-Systeme, röntgenbasierte Bildgebungssysteme wie zum Beispiel CT-Systeme, ultraschallbasierte Bildgebungssysteme, PET-Systeme und so weiter beinhalten kann. Das System kann auch eines oder mehrere Robotersysteme beinhalten.

Im Allgemeinen beinhaltet ein System sowohl eine oder mehrere Hardwarekomponenten als auch eine oder mehrere Softwarekomponenten. Es ist jedoch auch möglich, dass das System lediglich eine oder mehrere Hardwarekomponenten aufweist oder lediglich eine oder mehrere Softwarekomponenten.

Dass das System durch den ersten Zustandsparameter charakterisierbar ist, kann derart verstanden werden, dass der erste Zustandsparameter zur Charakterisierung des Systems verwendet werden kann. Ein Gesamtzustand des technischen Systems kann gegebenenfalls durch eine Vielzahl von Zustandsparametern charakterisiert werden, wohingegen der erste Zustandsparameter lediglich eine bestimmte Qualität oder eine bestimmte Eigenschaft, insbesondere eine nicht-funktionale Eigenschaft, des Systems charakterisiert. Dasselbe gilt analog auch für den zweiten Zustandsparameter. Der erste und der zweite Zustandsparameter sind dabei nicht unabhängig voneinander, da aus dem zweiten Zustandsparameter eindeutig einer der N diskreten Werte für den ersten Zustandsparameter berechenbar ist. Umgekehrt ist im Allgemeinen aus einem gegebenen Wert für den ersten Zustandsparameter der zweite Zustandsparameter nicht eindeutig ableitbar. Dies spiegelt sich insbesondere auch darin wider, dass die Anzahl der Werte, die der zweite Zustandsparameter annehmen kann, größer ist als die Anzahl N der Werte, die der erste Zustandsparameter annehmen kann.

Mit anderen Worten können der erste Zustandsparameter und der zweite Zustandsparameter ähnliche oder gleiche Qualitäten oder Eigenschaften des technischen Systems betreffen, wobei jedoch die Auflösung, also die Anzahl der Werte, die zur Beschreibung der Qualität oder Eigenschaft des Systems verwendet werden können, je nach eingesetztem Zustandsparameter unterschiedlich ist. Durch die Verwendung des zweiten Zustandsparameters wird also gewissermaßen die Auflösung, mit der die Qualität oder Eigenschaft des technischen Systems charakterisiert werden kann, gegenüber der Verwendung des ersten Zustandsparameters erhöht.

Dass der erste Zustandsparameter genau die N diskreten Werten annehmen kann, kann insbesondere derart verstanden werden, dass ein Wertebereich des ersten Zustandsparameters aus den N diskreten Werten besteht, der erste Zustandsparameter also außer den N diskreten Werten keine anderen Werte annehmen kann.

Falls der zweite Zustandsparameter alle Werte in dem kontinuierlichen Wertebereich annehmen kann, kann dies insbesondere derart verstanden werden, dass der zweite Zustandsparameter keine Werte annehmen kann, die außerhalb des kontinuierlichen Wertebereichs liegen.

Der kontinuierliche Wertebereich kann beispielsweise als Intervall [m0, m] oder als Intervall [m0, m[, oder als Intervall ]m0, m] oder als Intervall ]m0, m[ dargestellt werden, wobei m0 und m reelle Zahlen sind und beispielsweise gilt m0 = 0 und m > 0.

Falls der zweite Zustandsparameter genau die M diskreten Werten annehmen kann, kann dies insbesondere derart verstanden werden, dass ein Wertebereich des zweiten Zustandsparameters aus den M diskreten Werten besteht, der zweite Zustandsparameter also außer den M diskreten Werten keine anderen Werte annehmen kann.

Um das Messergebnis zu erzeugen, wird insbesondere die wenigstens eine Messung an dem System durchgeführt, beispielsweise mittels eines Messsystems.

Wie oben erwähnt, kann der aktuelle Wert für den zweiten Zustandsparameter direkt aus dem Messergebnis bestimmt werden. Dazu kann also beispielsweise der zweite Zustandsparameter direkt als Messgröße gemessen werden. Alternativ kann wenigstens eine Messgröße des Systems gemessen werden, wobei der zweite Zustandsparameter keine der Messgrößen ist, und der aktuelle Wert für den zweiten Zustandsparameter kann aus der gemessenen wenigstens einen Messgröße berechnet werden, sodass also eine indirekte Bestimmung des zweiten Zustandsparameters aus dem Messergebnis erfolgt.

Der Bewertungskennwert kann als Wert einer vorgegebenen Bewertungskenngröße oder Bewertungsfunktion verstanden werden. Abhängig von dem aktuellen Wert für den zweiten Zustandsparameter und abhängig von dem vorgegebenen ersten kritischen Wert kann die Bewertungsfunktion beispielsweise ausgewertet werden, um den Bewertungskennwert zu bestimmen. Dementsprechend setzt die Bewertungsfunktion, und damit der Bewertungskennwert, den zweiten Zustandsparameter mit dem ersten kritischen Wert für den ersten Zustandsparameter in Beziehung. Auf diese Weise wird es möglich, die Nähe des Systemzustands zu dem durch den ersten kritischen Wert definierten Zustand abzuschätzen, indem der aktuelle Wert für den zweiten Zustandsparameter wie beschrieben bestimmt wird. Die Bestimmung des aktuellen Werts des ersten Zustandsparameters ist möglicherweise nicht ohne weiteres möglich oder wenig aussagekräftig, da eine Bestimmung des aktuellen Werts des ersten Zustandsparameters lediglich eine Aussage darüber liefert, ob der erste kritische Wert erreicht ist oder nicht, insbesondere falls N = 2. Auch für N größer 2 erlaubt die Berücksichtigung des zweiten Zustandsparameters jedoch eine genauere Abschätzung, wie nahe der Zustand des Systems sich an dem ersten kritischen Wert befindet, da M > N oder der zweite Zustandsparameter sogar, unter Berücksichtigung entsprechender Toleranzen und/oder Messunsicherheiten, ein kontinuierlicher Zustandsparameter ist.

Durch die vorliegende Erfindung wird also die Beschränkung des ersten Zustandsparameters auf zwei oder wenige diskrete Werte, insbesondere N Werte, und die damit einhergehende eingeschränkte Eignung zur Zustandsbewertung des Systems dadurch kompensiert, dass über den Umweg des zweiten Zustandsparameters ein genauerer Bezug zu dem Zustand des Systems hergestellt werden kann der dem ersten kritischen Wert entspricht, als dies allein durch Bestimmung oder Abschätzung des ersten Zustandsparameters möglich wäre.

Besonders plastisch lässt sich dies am Beispiel N = 2 darstellen. Der erste Zustandsparameter kann dann beispielsweise entweder gleich 0 oder gleich 1 sein. Ist der erste kritische Wert beispielsweise gleich 0, so kann durch Bestimmung des aktuellen Werts des Zustandsparameters nur festgestellt werden, ob der kritische Wert erreicht ist oder nicht. Wird für den zweiten Zustandsparameter nun beispielsweise ein kontinuierlicher Wertebereich von 0 bis 1 ermöglicht, wobei etwa der erste Zustandsparameter gleich 0 ist, wenn der zweite Zustandsparameter gleich 0 ist und der erste Zustandsparameter gleich 1 ist, wenn der zweite Zustandsparameter gleich 1 ist, so kann durch die Bestimmung des zweiten Zustandsparameters abgeschätzt werden, wie wahrscheinlich es ist, dass der erste Zustandsparameter aktuell oder zu einem bestimmten zukünftigen Zeitpunkt oder innerhalb eines bestimmten zukünftigen Zeitraums gleich 0 ist.

Ergibt sich aus der Bestimmung des zweiten Zustandsparameters etwa ein Wert von 0,9 für den zweiten Zustandsparameter, so ist möglicherweise eine andere Prognose für den ersten Zustandsparameter möglich, als wenn sich für den zweiten Zustandsparameter ein aktueller Wert von 0,1 ergibt. Im Falle von 0,9 für den zweiten Zustandsparameter könnte es beispielsweise möglich sein, dass die Wahrscheinlichkeit dafür, dass der erste Zustandsparameter innerhalb eines gegebenen Zeitraums gleich 0 wird, geringer ist, als für den Wert von 0,1 des zweiten Zustandsparameters.

Dieses Prinzip lässt sich selbstverständlich auch auf andere Werte für N und auf andere kontinuierliche Wertebereiche oder diskrete Wertebereiche für den zweiten Zustandsparameter übertragen, wobei stets gilt M > N. Das erläuterte Beispiel ist lediglich als nicht beschränkender Anwendungsfall zu verstehen, indem die Vorteile der Erfindung besonders einfach erkennbar sind.

Der Bewertungskennwert kann beispielsweise zu einer Prognose betreffend den Zustand des Systems, insbesondere betreffend einen zukünftigen Wert für den ersten Zustandsparameter, verwendet werden. Der Bewertungskennwert kann alternativ oder zusätzlich auch als Entscheidungsgrundlage zur Einleitung einer Maßnahme an dem System verwendet werden, beispielsweise ob eine Anpassung von Betriebsparametern des Systems, ein Softwareupdate, eine Wartung oder ein Austausch des Systems oder von Komponenten des Systems durchgeführt werden soll und so weiter.

Gemäß zumindest einer Ausführungsform des computerimplementierten Verfahrens gilt 1 < N ≤ 5. Vorzugsweise gilt 1 < N ≤ 3, weiter bevorzugt gilt N = 2.

Gemäß zumindest einer Ausführungsform kann der zweite Zustandsparameter kann alle Werte in dem kontinuierlichen Wertebereich annehmen oder es gilt M ≥ 5*N, vorzugsweise M ≥ 10*N, insbesondere M ≥ 50*N oder M ≥ 100*N.

Gemäß zumindest einer Ausführungsform entspricht der erste kritische Wert einem Zustand des Systems, in dem das System eine vorgegebene Leistungsanforderung und/oder eine vorgegebene Zuverlässigkeitsanforderung und/oder eine vorgegebene Sicherheitsanforderung und/oder eine vorgegebene Verfügbarkeitsanforderung nicht erfüllen kann.

Ist der erste Zustandsparameter beispielsweise gleich einem ersten Wert der N diskreten Werte, beispielsweise gleich 0, so kann das System die Leitungs-, Zuverlässigkeits-, Sicherheits- und/oder Verfügbarkeitsanforderung beispielsweise nicht erfüllen, sodass also der erste Wert, beispielsweise 0, dem ersten kritischen Wert entspricht. Hat der erste Zustandsparameter einen von dem ersten Wert verschiedenen zweiten Wert der N diskreten Werte, beispielsweise eins, so entspricht dies einem Zustand, in dem das System die Leistungs-, Zuverlässigkeits-, Sicherheits- und/oder Verfügbarkeitsanforderung erfüllen kann. Gilt N > 2, so entsprechen beispielsweise auch alle anderen Werte der N diskreten Werte außer dem ersten kritischen Wert einer Situation, in der das System die genannte Anforderung erfüllen kann und gegebenenfalls auch übererfüllen kann oder zusätzliche Anforderungen erfüllen kann oder dergleichen.

Gemäß zumindest einer Ausführungsform wird abhängig von dem ersten kritischen Wert ein zweiter kritischer Wert für den zweiten Zustandsparameter bestimmt. Der Bewertungskennwert wird abhängig von einem Abstand des aktuellen Werts für den zweiten Zustandsparameter von dem zweiten kritischen Wert bestimmt.

Der Abstand kann insbesondere durch eine geeignete Abstandsmetrik bestimmt werden. Insbesondere kann der Abstand einer Differenz zwischen dem aktuellen Wert für den zweiten Zustandsparameter und dem zweiten kritischen Wert entsprechen oder einem Absolutbetrag dieser Differenz.

Da aus jedem Wert für den zweiten Zustandsparameter eindeutig ein entsprechender Wert für den ersten Zustandsparameter folgt, stehen auch der erste kritische Wert und der zweite kritische Wert in diesem Zusammenhang, sodass aus dem zweiten kritischen Wert für den zweiten Zustandsparameter eindeutig der erste kritische Wert für den ersten Zustandsparameter folgt. Dies bedeutet jedoch nicht, dass aus dem ersten kritischen Wert auch in eindeutiger Weise der zweite kritische Wert bestimmt werden kann.

Der zweite kritische Wert wird also insbesondere abhängig von dem ersten kritischen Wert und einer vorgegebenen Regel bestimmt. Beispielsweise kann der zweite kritische Wert dem kleinstmöglichen Wert für den zweiten Zustandsparameter entsprechen, der zu dem ersten kritischen Wert für den ersten Zustandsparameter führt, oder dem größten solchen Wert für den zweiten Zustandsparameter oder einem Mittelwert aller Werte für den zweiten Zustandsparameter, die zum kritischen ersten Wert führen, oder dergleichen entsprechen.

Im folgenden beispielhaften Anwendungsfall sei N = 2, wobei 0 dem ersten kritischen Wert entspricht und 1 einem nicht kritischen Wert für den ersten Zustandsparameter. Der zweite Zustandsparameter kann beispielsweise alle ganzzahligen Werte von 0 bis M annehmen, wobei M beliebig groß sein kann, beispielsweise gleich 10.000. Der erste kritische Wert 0 kann beispielsweise einer Situation entsprechen, in der das System eine Anzahl von 1.000 Anfragen nicht in einer vorgegebenen Maximalzeit verarbeiten kann. Kann das System also 1.000 Anfragen oder mehr in der vorgegebenen Zeit bearbeiten, so ist der erste Zustandsparameter gleich 1, anderenfalls ist er gleich 0. Der zweite Zustandsparameter kann dann beispielsweise der tatsächlichen Anzahl von Anfragen entsprechen, die das System innerhalb der vorgegebenen Maximalzeit verarbeiten kann. Ist diese Zahl gleich 1.000 oder größer, so folgt daraus, dass der erste Zustandsparameter gleich 1 ist, ist die Zahl der innerhalb der vorgegebenen Maximalzeit verarbeitbaren Anfragen 999 oder weniger, so folgt daraus, dass der erste Zustandsparameter gleich 0 ist.

Der zweite kritische Wert kann dann beispielsweise als 999 definiert werden, was dem größten Wert für den zweiten Zustandsparameter entspricht, der zum ersten kritischen Wert 0 für den ersten Zustandsparameter führt. Es sind jedoch auch andere Möglichkeiten zur Wahl des zweiten kritischen Werts möglich, beispielsweise 1.200, um einen bestimmten Mindestabstand zum ersten kritischen Wert zu gewährleisten.

Gemäß zumindest einer Ausführungsform nimmt der erste Zustandsparameter den ersten kritischen Wert genau dann an, wenn der zweite Zustandsparameter kleiner oder gleich dem zweiten kritischen Wert ist.

Dabei ist der zweite kritische Wert insbesondere kleiner als M beziehungsweise kleiner als m, insbesondere wenn m0 = 0.

Alternativ kann der erste Zustandsparameter den ersten kritischen Wert genau dann annehmen, wenn der zweite Zustandsparameter größer oder gleich dem zweiten kritischen Wert ist.

Es hängt von der konkreten Ausgestaltung des Systems und seiner Funktionalitäten ab, welche der Alternativen vorteilhaft ist.

Gemäß zumindest einer Ausführungsform quantifiziert der zweite Zustandsparameter eine Leistungsfähigkeit des Systems, wobei die Leistungsfähigkeit des Systems umso größer ist, je größer der zweite Zustandsparameter ist.

In solchen Ausführungsformen kann beispielsweise der erste Zustandsparameter insbesondere dem ersten kritischen Wert genau dann entsprechen, wenn der zweite Zustandsparameter kleiner oder gleich dem zweiten kritischen Wert ist.

Die Leistungsfähigkeit kann je nach Ausgestaltung des Systems unterschiedlich zu bewerten sein. Beispielsweise kann die Leistungsfähigkeit dadurch definiert sein, wie schnell das System eine bestimmte Aufgabe durchführen kann, wie oft es eine solche Aufgabe in welchem Zeitraum durchführen kann, mit welcher Genauigkeit das System eine bestimmte Aufgabe durchführen kann und so weiter.

Gemäß zumindest einer Ausführungsform wird abhängig von dem Bewertungskennwert eine Prognose für den ersten Zustandsparameter durchgeführt.

Unter der Prognose für den ersten Zustandsparameter kann dabei insbesondere eine Abschätzung verstanden werden, wie der Wert für den ersten Zustandsparameter in einem zukünftigen Zeitraum oder zu einem zukünftigen Zeitpunkt sein wird oder wie sich der Wert für den ersten Zustandsparameter in dem zukünftigen Zeitraum voraussichtlich entwickeln wird.

Gemäß zumindest einer Ausführungsform wird ein zeitlicher Verlauf des Bewertungskennwerts bestimmt, indem die Schritte des Erhaltens des Messergebnisses, gegebenenfalls des Durchführens der wenigstens einen Messung an dem System, des Bestimmens des aktuellen Werts für den zweiten Zustandsparameter und des Bestimmens des Bewertungskennwerts während eines Bewertungszeitraums wiederholt durchgeführt werden, beispielsweise periodisch oder zyklisch durchgeführt werden. Die Prognose für den ersten Zustandsparameter wird abhängig von dem zeitlichen Verlauf des Bewertungskennwerts durchgeführt.

Dadurch lässt sich eine genauere und/oder zuverlässigere Vorhersage über den ersten Zustandsparameter treffen.

Gemäß zumindest einer Ausführungsform wird abhängig von dem Bewertungskennwert, insbesondere dem zeitlichen Verlauf des Bewertungskennwerts, eine Wahrscheinlichkeit dafür berechnet, dass ein aktueller Wert des ersten Zustandsparameters dem ersten kritischen Wert entspricht.

Dies kann insbesondere vorteilhaft sein, wenn der aktuelle Wert des ersten Zustandsparameters nicht gemessen werden kann oder wenn die Messung des ersten Zustandsparameters den Betrieb oder die Funktion des Systems ungünstig beeinflussen würde, beispielsweise indem eine bestimmungsgemäße Funktion des Systems nicht mehr ausgeführt werden könnte. So ist es beispielsweise während einer operativen Phase eines Systems nicht oder nur mit erhöhtem zeitlichen Aufwand und Produktionsausfällen möglich, Leistungstests zur Bestimmung des ersten Zustandsparameters durchzuführen. Daher wird in solchen Ausführungsformen mit Vorteil auf den zweiten Zustandsparameter zurückgegriffen, der, insbesondere automatisch, während des normalen Betriebs des Systems erfasst werden kann.

Gemäß zumindest einer Ausführungsform wird abhängig von der Bewertungskenngröße, insbesondere dem zeitlichen Verlauf, eine Wahrscheinlichkeit dafür berechnet, dass der erste Zustandsparameter innerhalb eines vorgegebenen zukünftigen Zeitraums den ersten kritischen Wert annehmen wird. Die Berechnung der Wahrscheinlichkeit kann insbesondere der Prognose entsprechen oder Teil der Prognose sein.

Gemäß zumindest einer Ausführungsform wird abhängig von der Bewertungskenngröße, insbesondere abhängig von dem zeitlichen Verlauf der Bewertungskenngröße, ein Zeitpunkt abgeschätzt, zu dem der erste Zustandsparameter den ersten kritischen Wert voraussichtlich annehmen wird. Die Prognose kann also dem Abschätzen des Zeitpunkts entsprechen oder das Abschätzen des Zeitpunkts beinhalten.

Gemäß einem weiteren Aspekt der Erfindung wird ein Verfahren zur Zustandsbewertung, insbesondere zur automatischen Zustandsbewertung, eines technischen Systems angegeben. Dabei wird ein erfindungsgemäßes computerimplementiertes Verfahren durchgeführt und das Messergebnis wird erzeugt, indem wenigstens eine Messung an dem System durchgeführt wird.

Je nach Ausgestaltung des Systems kann die Messung unterschiedlich ausgestaltet sein. Beispielsweise kann zur Durchführung der wenigstens einen Messung ein Zustand eines Puffers, beispielsweise eines Nachrichtenpuffers, einer Warteschlange oder dergleichen gemessen werden, eine Speicherauslastung, eine Durchlaufzeit und so weiter.

Gemäß zumindest einer Ausführungsform wird die wenigstens eine Messung mittels eines Messsystems vollautomatisch gemäß einem vorgegebenen Messprotokoll durchgeführt.

Das Messprotokoll kann dabei derart verstanden werden, dass es definiert, welche Messung zu welchem Zeitpunkt in welcher Häufigkeit und so weiter durchgeführt wird.

Gemäß einem weiteren Aspekt der Erfindung wird eine Zustandsbewertungsvorrichtung zur Zustandsbewertung eines technischen Systems nach Anspruch 13 angegeben.

Gemäß zumindest einer Ausführungsform der Zustandsbewertungsvorrichtung weist diese ein Messsystem auf, das dazu eingerichtet ist, die wenigstens eine Messung an dem System durchzuführen, um die Messergebnisse zu erzeugen und diese an die wenigstens eine Recheneinheit zu übermitteln.

Je nach Ausführungsform des Systems ist das Messsystem unterschiedlich ausgestaltet. Beispielsweise kann das Messsystem einen oder mehrere Sensoren zur Messung der einen oder mehreren Messgröße beinhalten. Das Messen einer Messgröße kann aber auch das Auslesen eines Speicherbereichs, beispielsweise eines Puffers oder dergleichen, durch entsprechende Messmittel, die auch teilweise oder vollständig softwareimplementiert sein können, beinhalten.

Weitere Ausführungsformen der erfindungsgemäßen Zustandsbewertungsvorrichtung folgen unmittelbar aus den verschiedenen Ausführungsformen des erfindungsgemäßen computerimplementierten Verfahrens und des erfindungsgemäßen Verfahrens zur Zustandsbewertung und jeweils umgekehrt. Insbesondere kann die erfindungsgemäße Zustandsbewertungsvorrichtung dazu eingerichtet oder programmiert sein, ein erfindungsgemäßes computerimplementiertes Verfahren oder ein erfindungsgemäßes Verfahren durchzuführen oder die erfindungsgemäße Zustandsbewertungsvorrichtung führt ein solches computerimplementiertes Verfahren oder Verfahren durch.

Gemäß einem weiteren Aspekt der Erfindung wird ein Computerprogrammprodukt nach Anspruch 15 angegeben.

Unter einer Recheneinheit kann insbesondere ein Datenverarbeitungsgerät verstanden werden, die einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer Festwertspeicher, EPROM (englisch: "erasable read-only memory"), als elektrisch löschbarer Festwertspeicher, EEPROM (englisch: "electrically erasable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Ist im Rahmen der vorliegenden Offenbarung die Rede davon, dass eine Komponente der erfindungsgemäßen Zustandsbewertungsvorrichtung, insbesondere die wenigstens eine Recheneinheit der Zustandsbewertungsvorrichtung, dazu eingerichtet, ausgebildet, ausgelegt, oder dergleichen ist, eine bestimmte Funktion auszuführen oder zu realisieren, eine bestimmte Wirkung zu erzielen oder einem bestimmten Zweck zu dienen, so kann dies derart verstanden werden, dass die Komponente, über die prinzipielle oder theoretische Verwendbarkeit oder Eignung der Komponente für diese Funktion, Wirkung oder diesen Zweck hinaus, durch eine entsprechende Anpassung, Programmierung, physische Ausgestaltung und so weiter konkret und tatsächlich dazu in der Lage ist, die Funktion auszuführen oder zu realisieren, die Wirkung zu erzielen oder dem Zweck zu dienen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert.

Dabei zeigen
FIG 1 eine schematische Blockdarstellung eines Systems und einer beispielhaften Ausführungsform einer erfindungsgemäßen Zustandsbewertungsvorrichtung; und
FIG 2 ein Ablaufdiagramm einer beispielhaften Ausführungsform eines erfindungsgemäßen Verfahrens zur Zustandsbewertung des technischen Systems.

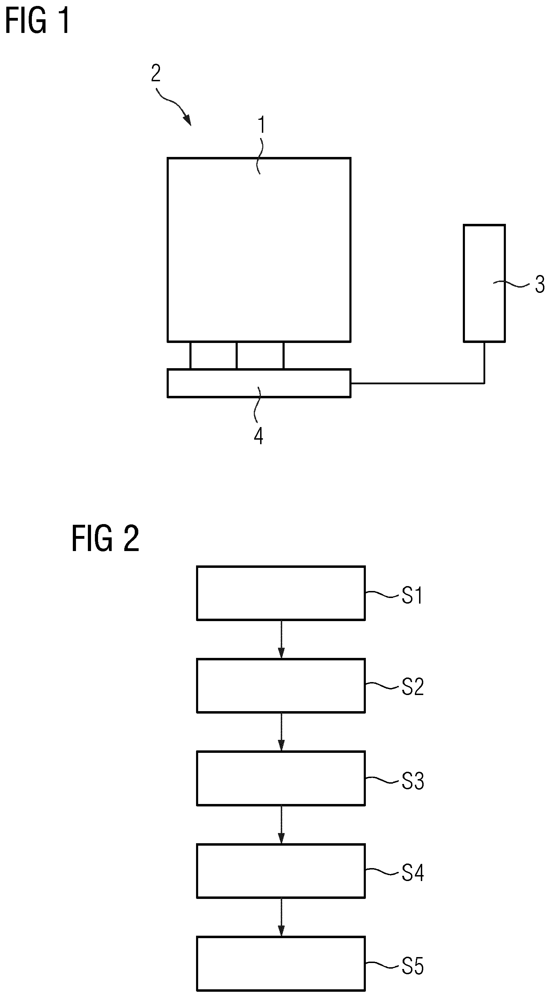

In der FIG 1 ist schematisch eine beispielhafte Ausführungsform einer erfindungsgemäßen Zustandsbewertungsvorrichtung 2 zur Zustandsbewertung eines technischen Systems 1 gezeigt. Das System 1 ist durch einen vorgegebenen ersten Zustandsparameter charakterisierbar, der N verschiedene diskrete Werte annehmen kann, wobei N eine natürliche Zahl und größer als 1 ist, vorzugsweise ist N = 2. Außerdem kann das System 1 durch eine zweiten Zustandsparameter charakterisiert werden, der alle Werte in einem kontinuierlichen Wertebereich annehmen kann oder der M verschiedene diskrete Werte annehmen kann, wobei M eine natürliche Zahl und größer als N ist, insbesondere sehr viel größer als N ist, beispielsweise mindestens 10*N oder mindestens 100*N.

Die Zustandsbewertungsvorrichtung 2 weist ein Messsystem 4 auf, das an dem System 1 eine oder mehrere Messungen zur Messung einer oder mehrerer Messgrößen vornehmen kann, sowie eine Recheneinheit 3, die mit dem Messsystem 4 verbunden ist, um ein Messergebnis, insbesondere die Messwerte für die wenigstens eine Messgröße, zu erhalten.

Die Zustandsbewertungsvorrichtung 2 ist insbesondere dazu eingerichtet, eine beispielhafte Ausführungsform eines erfindungsgemäßen Verfahrens zur Zustandsbewertung des technischen Systems 1 durchzuführen.

FIG 2 zeigt ein Ablaufdiagramm eines solchen erfindungsgemäßen Verfahrens zur Zustandsbewertung des technischen Systems 1. Dabei wird in Schritt S1 mittels des Messsystems 4, insbesondere vollautomatisch, gemäß einem vorgegebenen Messprotokoll wenigstens eine Messung an dem System 1 durchgeführt, um das Messergebnis zu erzeugen. Das Messergebnis wird in Schritt S2 an die Recheneinheit 3 übermittelt und die Recheneinheit 3 kann eine beispielhafte Ausführungsform eines erfindungsgemäßen computerimplementierten Verfahrens zur Zustandsbewertung durchführen, das durch die Schritte S3 bis S5 dargestellt wird.

Dabei stehen der zweite Zustandsparameter und der erste Zustandsparameter derart miteinander in Zusammenhang, als dass aus jedem Wert, den der erste zweite Zustandsparameter annehmen kann, eindeutig einer der N diskreten Werte für den ersten Zustandsparameter berechenbar ist.

Zum Durchführen des computerimplementierten Verfahrens bestimmt die Recheneinheit 3 in Schritt S3 abhängig von dem Messergebnis einen aktuellen Wert für den zweiten Zustandsparameter. Abhängig von dem aktuellen Wert für den zweiten Zustandsparameter und abhängig von einem vorgegebenen ersten kritischen Wert der N diskreten Werte für den ersten Zustandsparameter bestimmt die Recheneinheit 3 in Schritt S4 einen Bewertungskennwert. Basierend darauf kann die Recheneinheit 3 in Schritt S5 beispielsweise eine Prognose für den ersten Zustandsparameter durchführen.

Im Folgenden werden weitere Einzelheiten beispielhafter Ausführungsformen der Erfindung erläutert. Dabei wird der erste Zustandsparameter als NF1 bezeichnet und der zweite Zustandsparameter als NF2.

Basierend auf einer diskreten Definition NF1 zur Bestimmung von nichtfunktionalen Eigenschaften des Systems 1 kann die Größe NF2 abgeleitet werden, die Werte in einem größeren Zahlenraum als NF1 aufweisen kann oder Werten in einem kontinuierlichen Zahlenraum, und beispielweise folgende Eigenschaften aufweist:
- Aus NF2 heraus lässt sich die ursprüngliche diskrete Definition von NF1 wiedergewinnen.
- NF2 wird bestimmt durch Daten des Systems 1, die für eine Analyse zur Verfügung stehen.
   a. Beispielsweise zur Betriebszeit, auch al OPS bezeichnet. Dann kann beispielsweise zu jedem Zeitpunkt eine Quantifizierung der Größe NF2 vorgenommen werden.
   b. Und/oder zur Entwicklungszeit, auch als DEV bezeichnet, in verschiedenen Entwicklungsumgebungen, Teststufen oder Integrationsstufen. Dann kann im jeweiligen Kontext eine Bewertung der nichtfunktionalen Eigenschaften für diese Umgebung vorgenommen werden. Die absoluten Werte jeweils zwischen den Umgebungen oder von DEV nach OPS sind nicht notwendigerweise identisch zu interpretieren.
- Zu jedem Wert von NF2 lässt sich bewerten, wie kritisch ein Systemzustand des Systems 1 in Bezug zu NF1 ist. Dies lässt sich durch die Bewertungsfunktion B beziehungsweise entsprechende Bewertungskennwerte B(NF2) quantifizieren. Der Bewertungskennwerte kann beispielsweise angeben, ob eine es wahrscheinlich ist, dass NF1 in naher Zukunft den ersten kritischen Wert annimmt, was auch als "Verletzung von NF1" bezeichnet werden kann, ist oder welches Risiko hierfür besteht. Möglich sind sowohl diskrete Bewertungen mit geeignet vielen Klassen als auch kontinuierliche Bewertungen.

Die zur Berechnung von NF2 und B(NF2) benötigten Daten können beispielsweise automatisiert erfassbar sein, um eine automatisierte Reaktion zu ermöglichen. Abhängig von der Anwendung könnte auch eine semi-automatisierte Erfassung umgesetzt werden. Etwa könnte ein Erfassungs- und Bewertungsprozess manuell gestartet werden.

In anderen Varianten kann auch eine rein manuelle Erfassung ausreichend sein. Der Aufwand ist hierbei jedoch höher, die erreichbaren Zykluszeiten sind länger und die Gefahr durch manuelle Arbeiten Fehler im Messprozess einzubringen ist größer als bei der vollständigen Automatisierung.

Die erfassten Werte können dann zum Beispiel über DevOps Methoden an diejenige Stelle zurückgespielt werden, die eine Bewertung vornimmt und ggf. weitere Reaktionen auslöst.

In einem Beispiel werden in DEV zu jedem relevanten Systemstand die Messgrößen automatisiert in einem CI (englisch: "continuous integration") Prozess erfasst und basierend darauf NF2 berechnet und die Bewertung B(NF2) ermittelt. Diese Daten werden zum Beispiel mit den Informationen zu welchem Entwicklungsstand und aus welcher Erfassungsumgebung sie stammen in einer Datenbank gesammelt.

In OPS werden zu relevanten Zeitpunkten, insbesondere unter Erfassung der exakten Systemversion einer Software und/oder Hardware des Systems 1, und von relevanten Randbedingungen aus der Systemumgebung, ebenfalls NF2 und B(NF2) ermittelt und über DevOps Methoden zurück an DEV übermittelt. Auch diese Daten können werden in einer Datenbank gesammelt werden, beispielsweise mit den Informationen zur Systemversion und/oder Randbedingungen aus OPS.

Anwendungsspezifisch lassen sich sowohl in DEV als auch in OPS noch weitere Parameter erfassen, die für spätere Analysen relevant sind. Hier können auch Parameter erfasst werden, bei denen kein expliziter Zusammenhang bekannt ist, um zu untersuchen, ob durch statistische Methoden oder Methoden des maschinellen Lernens, ML, etwa anhand neuronaler Netze, Zusammenhänge erkannt werden können.

Diese erfassten Daten ermöglichen eine Beobachtung über die Auswirkungen von Systemänderungen. Es können Trends für NF2, und B(NF2) in den jeweiligen Umgebungen aus DEV und OPS erfasst und sichtbar gemacht werden.

Grundsätzlich lassen sich mit dieser Datenbasis Zusammenhänge von NF2 und B(NF2) zwischen Systemversionen und Systemumgebungen, insbesondere verschiedenen Umgebungen in DEV und verschiedenen Umgebungen in OPS, erfassen.

Trends und Zusammenhänge lassen sich dann sowohl zu einem Systemstand über verschiedene Anwendungsumgebungen, als auch in einer Anwendungsumgebung zu verschiedenen Systemständen ableiten.

In DEV stehen in der Regel verschiedene Integrationsumgebungen beziehungsweise Testumgebungen zur Verfügung, entsprechend des gewählten Integrations- und Testprozesses. Hier lassen sich nun bei fixierter Version des Systems 1 wie beschrieben die Messgrößen erfassen, die zur Ermittlung von NF2 benötigt werden. NF2 und B(NF2) können für jede dieser Umgebungen berechnet werden. Mithilfe der Daten von NF2, B(NF2) lassen sich Auswirkung von NF2 und B(NF2) in OPS prognostizieren beziehungsweise abschätzen. Dies kann beispielsweise initial über Heuristiken erfolgen. Im Laufe der Zeit können bei wachsender Datenbasis auch ML Verfahren anwendbar sein.

Besonders sinnvoll kann die Methode etwa in DEV angewandt werden, vor einem Release und Deployment einer konkreten Systemversion nach OPS. Die Trends in den verschiedenen DEV Entwicklungsumgebungen können erfasst werden, um eine Prognose für die Leistungsfähigkeit des Systems in OPS ermöglichen. Diese Herangehensweise kann als Ergänzung zu bekannten Maßnahmen zur Qualitätssicherung eingesetzt werden.

Eine weitere beispielhafte Anwendung in DEV besteht darin, die ermittelten Bewertungskennwerte kontinuierlich zur Steuerung der Entwicklungsaktivitäten zu verwenden. Ungünstige Trends, etwa eine Verschlechterung der Bewertungskennwerte kann erkannt werden, eine Analyse der Ursachen kann erfolgen und geeignete Abhilfemaßnahmen können geplant werden.

Als Beispiel für eine Anwendung in OPS können nach einem Release oder Deployment die Messgrößen zur Bestimmung von NF2 und B(NF2) in den für das Deployment ausgewählten OPS-Umgebungen erfasst werden, um die Entscheidung zu unterstützen, ob das Release bezüglich der nichtfunktionalen Eigenschaften eine Verbesserung darstellt, ausreichend ist, oder ob ein Rollback notwendig wird. Es kann auch die Entscheidung unterstützt, ob ein Deployment auf allen, oder auf welchen weiteren OPS-Umgebungen vertretbar ist, und trägt so zur Implementierung der DevOps Prozesse bei. Die konkrete, lokale Beobachtung dieser Werte in verschiedenen OPS-Umgebungen, in denen das Release ausgerollt wurde, ermöglicht jeweils lokale Entscheidungen bezogen auf die einzelne OPS Umgebung.

Mit wachsender Datenbasis lassen sich hier ebenfalls Zusammenhänge lernen, um zu prognostizieren, in welchen Umgebungen das Roll-out durchgeführt werden kann, ohne ungewünscht hohe Risiken einzugehen.

Vorzugsweise wird die Erfassung der notwendigen Messgrößen zur Ermittlung von NF2 komplett automatisiert. Hierzu können dann entsprechende Entscheidungsregeln definiert werden. Auch die Bewertung von Trends lässt sich beispielsweise automatisieren. Initial kann auch ein Human-in-the loop Ansatz gewählt werden, solange die ausreichende Güte der durch die Recheneinheit 3 getroffenen Entscheidungen noch nicht abgesichert ist. Damit ist die Methode in einem DevOps Kontext einsetzbar.

Die stetige Bestimmung von NF2 und/oder B(NF2) ermöglicht auch rückblickende Analysen, welche Änderungen im System z1 u einer positiven oder negativen Veränderung der Bewertungskennwerte führen. Eine Analyse von Ursachen beispielsweise bei erkannter Verschlechterung relevanter Systemqualitäten wird somit erleichtert.

Als weiterer beispielhafter Anwendungsfall wird ein System 1 angenommen, das 1000 Anfragen innerhalb einer vorgegebenen Zeit bearbeiten können soll. Dabei ist beispielsweise NF1 = 1, wenn das System 1 zu einem gegebenen Zeitpunkt ausreichend leistungsfähig ist, um potentiell 1000 eintreffende Anfragen zu bearbeiten, anderenfalls ist NF1 = 0. In DEV beispielsweise durch einen Test mit entsprechender Anfragerate ermittelt werden, ob das System 1000 Anfragen innerhalb der vorgegebenen Zeit bearbeiten kann, beziehungsweise welche messbaren Auswirkungen dies in anderen Systembereichen hat, wie sich beispielsweise Puffer oder Warteschlangen füllen.

In OPS ist NF1 gegebenenfalls nicht direkt messbar, etwa wenn keine 1000 Anfragen in vorgegebenen Zeiträumen tatsächlich eintreffen.

NF2 kann der Anzahl der Anfragen, die vom System 1 innerhalb der vorgegebenen Zeit tatsächlich bearbeitet werden können. B(NF2) bewertet dies in Relation zur aktuell benötigten Leistungsfähigkeit, quantifiziert also, wie nahe an NF1 = 0 beziehungsweise wie nahe an NF2 < 1000 das System 1 ist. In DEV könnte durch gezielte Leistungstests, also beispielsweise durch steigern der Anfragerate, ermittelt werden, bis zu wieviel Anfragen in der vorgegebenen Zeit das System 1 diese rechtzeitig bearbeiten kann.

In OPS kann möglicherweise während des laufenden Betriebs kein solcher Leistungstest durchgeführt werden, ohne zu riskieren, dass das System 1 die tatsächlich anstehen Anfragen nicht rechtzeitig bearbeiten kann. In diesem Fall können beispielsweise Systemparameter wie Füllstände von Puffern oder Warteschlangen als Messgrößen dienen, um eine Abschätzung zu ermöglichen.

Für B(NF2) kann anwendungsabhängig eine Abstandsmetrik zu einem zweiten kritischen Wert für NF2, der dem ersten kritischen Wert für NF1 entspricht, also beispielsweise zur kritischen Schwelle benötigter oder erwarteter Anfragen in Bezug auf die aktuell leistbare Anzahl an Anfragen gewählt werden.

Der so erhobene Leistungsstand des Systems 1 auf einer kontinuierlichen Skala oder auf einer diskreten mit vielen Stufen, im Unterschied zur ursprünglich nur binären Skala oder diskreten mit sehr wenigen Stufen, kann dann über die Zeit erfasst werden. Die erfassten Daten zur kontinuierlichen Bewertung der Leistungsfähigkeit des Systems 1 können bezüglich Trends oder Tendenzen analysiert werden.

Es können also beispielsweise Veränderungen über die Zeit bei gleicher Systemversion aber beispielsweise anderen Umgebungsbedingungen erkannt werden, und/oder Veränderungen über verschiedene Systemversionen bei gegebenenfalls gleichen oder auch zeitlich geänderten Umgebungsbedingungen und/oder Veränderungen in der Korrelation von DEV-Leistungsfähigkeit nach OPS-Leistungsfähigkeit bei gleicher Systemversion in unterschiedlichen OPS-Umgebungen.

Verschiedene Ausführungsformen der Erfindung erlauben es, eine originär nur binär feststellbare Systemeigenschaft NF1 durch eine kontinuierliche Größe NF2 zu ersetzen und auf dieser Basis auch festzustellen wie Nahe das System 1 an der Verletzung der binär feststellbaren Systemeigenschaft NF1 ist. Es können insbesondere frühzeitig Trends und Tendenzen zu den relevanten nichtfunktionalen Eigenschaften erkannt werden. Ein Monitoring über die Zeit sowohl in DEV als auch in OPS ermöglicht es, notwendige Systemanpassungen oder Entwicklungsaktivitäten zu veranlassen, wenn die Kennwerte sich kritischen Bereichen nähern. Dies wäre ohne eine kontinuierliche Bewertung in dieser Form gegebenenfalls nicht möglich, da die diskrete nichtfunktionale Eigenschaft NF1 noch erfüllt ist.

Die notwendigen Daten zur Ermittlung der kontinuierlichen Größe NF2 können automatisiert erfasst werden. Damit sind entsprechende Ausführungsformen des Verfahrens in automatisierten Abläufen wie CI und DevOps anwendbar.

Die automatisierte Erfassung der zugrunde liegenden Systemeigenschaften zu verschiedenen Entwicklungsständen, Systemversionen und Systemumgebungen, sowie der Größen NF1, NF2, B(NF2) erlauben insbesondere die Anwendung von maschinellem Lernen. Beispielsweise kann hiermit die Prognose von DEV nach OPS gelernt werden, was im Vergleich zu Heuristiken bei ausreichender Datenbasis bessere Ergebnisse erzielen kann.

## Patentansprüche

1. Computerimplementiertes Verfahren zur Zustandsbewertung eines technischen Systems (1), das durch einen vorgegebenen ersten Zustandsparameter charakterisierbar ist und das durch einen vorgegebenen zweiten Zustandsparameter charakterisierbar ist, wobei
- der erste Zustandsparameter genau N verschiedene diskrete Werte annehmen kann, wobei N eine natürliche Zahl und größer als eins ist; wobei
- der zweite Zustandsparameter alle Werte in einem kontinuierlichen Wertebereich annehmen kann oder genau M verschiedene diskrete Werte annehmen kann, wobei M eine natürliche Zahl und größer als N ist; wobei
**dadurch gekennzeichnet, dass**
- der erste Zustandsparameter und der zweite Zustandsparameter derart miteinander in Zusammenhang stehen, als dass aus jedem Wert, den der zweite Zustandsparameter annehmen kann, eindeutig einer der N diskreten Werte für den ersten Zustandsparameter berechenbar ist; wobei basierend auf einer diskreten Definition des ersten Zustandsparameters zur Bestimmung von nichtfunktionalen Eigenschaften des technischen Systems eine Größe des zweiten Zustandsparameters abgeleitet wird; wobei
die Größe Werte in einem größeren Zahlenraum als der erste Zustandsparameter aufweist oder Werte in einem kontinuierlichen Zahlenraum; wobei das Verfahren weiterhin durch die folgenden Schritte gekennzeichnet ist:
- Erhalten von einem Messergebnis wenigstens einer Messung an dem System (1) ;
- Bestimmen abhängig von dem Messergebnis eines aktuelles Wertes für den zweiten Zustandsparameter; wobei der aktuelle Wert direkt oder indirekt aus dem Messergebnis bestimmt wird;
- Bestimmen eines Bewertungskennwertes abhängig von dem aktuellen Wert für den zweiten Zustandsparameter und abhängig von einem vorgegebenen ersten kritischen Wert der N diskreten Werte für den ersten Zustandsparameter durch Auswerten einer Bewertungsfunktion; wobei
die Bewertungsfunktion den zweiten Zustandsparameter mit dem ersten kritischen Wert für den ersten Zustandsparameter in Beziehung setzt.

2. Computerimplementiertes Verfahren nach Anspruch 1, wobei der erste kritische Wert einem Zustand des Systems (1) entspricht, in dem das System (1) eine vorgegebene Leistungsanforderung und/oder eine vorgegebene Zuverlässigkeitsanforderung und/oder eine vorgegebene Sicherheitsanforderung und/oder eine vorgegebene Verfügbarkeitsanforderung nicht erfüllen kann.

3. Computerimplementiertes Verfahren nach einem der vorhergehenden Ansprüche, wobei
- abhängig von dem ersten kritischen Wert ein zweiter kritischer Wert für den zweiten Zustandsparameter bestimmt wird; und
- der Bewertungskennwert abhängig von einem Abstand des aktuellen Werts für den zweiten Zustandsparameter von dem zweiten kritischen Wert bestimmt wird.

4. Computerimplementiertes Verfahren nach Anspruch 3, wobei der erste Zustandsparameter den ersten kritischen Wert genau dann annimmt, wenn der der zweite Zustandsparameter kleiner oder gleich dem zweiten kritischen Wert ist.

5. Computerimplementiertes Verfahren nach einem der vorhergehenden Ansprüche, wobei der zweite Zustandsparameter eine Leistungsfähigkeit des Systems (1) quantifiziert, wobei die Leistungsfähigkeit des Systems (1) umso größer ist, je größer der zweite Zustandsparameter ist.

6. Computerimplementiertes Verfahren nach einem der vorhergehenden Ansprüche, wobei abhängig von dem Bewertungskennwert eine Prognose für den ersten Zustandsparameter durchgeführt wird.

7. Computerimplementiertes Verfahren nach Anspruch 6, wobei
- ein zeitlicher Verlauf des Bewertungskennwerts bestimmt wird, indem die Schritte des Erhaltens des Messergebnisses, des Bestimmens des aktuellen Werts für den zweiten Zustandsparameter und des Bestimmens des Bewertungskennwerts während eines Bewertungszeitraums wiederholt durchgeführt werden; und
- die Prognose für den ersten Zustandsparameter abhängig von dem zeitlichen Verlauf des Bewertungskennwerts durchgeführt wird.

8. Computerimplementiertes Verfahren nach einem der vorhergehenden Ansprüche, wobei abhängig von dem Bewertungskennwert eine Wahrscheinlichkeit dafür berechnet wird, dass ein aktueller Wert des ersten Zustandsparameters dem ersten kritischen Wert entspricht.

9. Computerimplementiertes Verfahren nach einem der vorhergehenden Ansprüche, wobei abhängig von der Bewertungskenngröße eine Wahrscheinlichkeit dafür berechnet wird, dass der erste Zustandsparameter innerhalb eines vorgegebenen zukünftigen Zeitraums den ersten kritischen Wert annehmen wird.

10. Computerimplementiertes Verfahren nach einem der vorhergehenden Ansprüche, wobei abhängig von der Bewertungskenngröße ein Zeitpunkt abgeschätzt wird, zu dem der erste Zustandsparameter den ersten kritischen Wert voraussichtlich annehmen wird.

11. Verfahren zur Zustandsbewertung eines technischen Systems (1), wobei ein computerimplementiertes Verfahren nach einem der vorhergehenden Ansprüche durchgeführt wird und wobei das Messergebnis erzeugt wird, indem die wenigstens eine Messung an dem System (1) durchgeführt wird.

12. Verfahren nach Anspruch 11, wobei die wenigstens eine Messung mittels eines Messsystems (1) vollautomatisch gemäß einem vorgegebenen Messprotokoll durchgeführt wird.

13. Zustandsbewertungsvorrichtung (2) zur Zustandsbewertung eines technischen Systems (1), das durch einen vorgegebenen ersten Zustandsparameter charakterisierbar ist und das durch einen vorgegebenen zweiten Zustandsparameter charakterisierbar ist, wobei die Zustandsbewertungsvorrichtung (2) dazu eingerichtet ist, das Verfahren nach Anspruch 1 auszuführen.

14. Zustandsbewertungsvorrichtung (2) nach Anspruch 13, aufweisend ein Messsystem (4), das dazu eingerichtet ist, die wenigstens eine Messung an dem System (1) durchzuführen.

15. Computerprogrammprodukt mit Befehlen, welche
- bei Ausführung durch ein Computersystem das Computersystem dazu veranlassen, ein computerimplementiertes Verfahren nach einem der Ansprüche 1 bis 10 durchzuführen; und/oder
- bei Ausführung durch eine Zustandsbewertungsvorrichtung (2) nach Anspruch 14 die Zustandsbewertungsvorrichtung (2) dazu veranlassen, ein Verfahren nach einem der Ansprüche 11 oder 12 durchzuführen.

## Claims

1. Computer-implemented method for assessing the state of a technical system (1) characterizable by a predetermined first state parameter and characterizable by a predetermined second state parameter,
- the first state parameter being able to assume precisely N different discrete values, N being a natural number and greater than one;
- the second state parameter being able to assume all values in a continuous value range or being able to assume precisely M different discrete values, M being a natural number and greater than N;
**characterized in that**
- the first state parameter and the second state parameter are related to one another in such a way that each value that the second state parameter is able to assume can be used to definitively calculate one of the N discrete values for the first state parameter;
a discrete definition of the first state parameter for determining non-functional properties of the technical system being taken as a basis for deriving a magnitude of the second state parameter;
the magnitude having values in a larger number space than the first state parameter, or values in a continuous number space; the method also being **characterized by** the following steps:
- obtaining a measurement result of at least one measurement on the system (1);
- determining a current value for the second state parameter on the basis of the measurement result;
the current value being determined directly or indirectly from the measurement result;
- determining an assessment characteristic on the basis of the current value for the second state parameter and on the basis of a predetermined first critical value of the N discrete values for the first state parameter by evaluating an assessment function;
the assessment function relating the second state parameter to the first critical value for the first state parameter.

2. Computer-implemented method according to Claim 1, the first critical value corresponding to a state of the system (1) in which the system (1) cannot meet a predetermined performance requirement and/or a predetermined reliability requirement and/or a predetermined safety requirement and/or a predetermined availability requirement.

3. Computer-implemented method according to either of the preceding claims, wherein
- the first critical value is taken as a basis for determining a second critical value for the second state parameter; and
- the assessment characteristic is determined on the basis of a distance of the current value for the second state parameter from the second critical value.

4. Computer-implemented method according to Claim 3, the first state parameter assuming the first critical value precisely when the second state parameter is less than or equal to the second critical value.

5. Computer-implemented method according to one of the preceding claims, the second state parameter quantifying a performance capability of the system (1), the performance capability of the system (1) being greater the greater the second state parameter.

6. Computer-implemented method according to one of the preceding claims, wherein the assessment characteristic is taken as a basis for making a prediction for the first state parameter.

7. Computer-implemented method according to Claim 6, wherein
- an evolution of the assessment characteristic over time is determined by repeatedly performing the steps of obtaining the measurement result, determining the current value for the second state parameter and determining the assessment characteristic during an assessment period; and
- the prediction for the first state parameter is made on the basis of the evolution of the assessment characteristic over time.

8. Computer-implemented method according to one of the preceding claims, wherein the assessment characteristic is taken as a basis for calculating a probability of a current value of the first state parameter corresponding to the first critical value.

9. Computer-implemented method according to one of the preceding claims, wherein the assessment characteristic is taken as a basis for calculating a probability of the first state parameter assuming the first critical value within a predetermined future period.

10. Computer-implemented method according to one of the preceding claims, wherein the assessment characteristic is taken as a basis for estimating a time at which the first state parameter is likely to assume the first critical value.

11. Method for assessing the state of a technical system (1), wherein a computer-implemented method according to one of the preceding claims is carried out and wherein the measurement result is generated by performing the at least one measurement on the system (1).

12. Method according to Claim 11, wherein the at least one measurement is performed by means of a measuring system (1) fully automatically according to a predetermined measurement protocol.

13. State assessment device (2) for assessing the state of a technical system (1) characterizable by a predetermined first state parameter and characterizable by a predetermined second state parameter, the state assessment device (2) being configured to carry out the method according to Claim 1.

14. State assessment device (2) according to Claim 13, comprising a measuring system (4) configured to perform the at least one measurement on the system (1).

15. Computer program product comprising commands that
- when executed by a computer system, cause the computer system to carry out a computer-implemented method according to one of Claims 1 to 10; and/or
- when executed by a state assessment device (2) according to Claim 14, cause the state assessment device (2) to carry out a method according to either of Claims 11 and 12.

## Revendications

1. Procédé mis en œuvre par ordinateur destiné à l'évaluation de l'état d'un système technique (1), qui est caractérisable par le biais d'un premier paramètre d'état prédéfini et qui est caractérisable par le biais d'un second paramètre d'état prédéfini, dans lequel
- le premier paramètre d'état peut prendre exactement N valeurs discrètes différentes, dans lequel N est un nombre naturel et est supérieur à un ; dans lequel
- le second paramètre d'état peut prendre toutes les valeurs dans une plage de valeurs continue ou exactement M valeurs discrètes différentes, dans lequel M est un nombre naturel et est supérieur à N ; dans lequel
**caractérisé en ce que**
le premier paramètre d'état et le second paramètre d'état sont en rapport l'un avec l'autre de telle sorte que, à partir de chaque valeur que peut prendre le second paramètre d'état l'une des N valeurs discrètes peut être calculée de manière univoque pour le premier paramètre d'état ; dans lequel sur la base d'une définition discrète du premier paramètre d'état destiné à la détermination de propriétés non fonctionnelles du système technique une grandeur du second paramètre d'état est déduite ; dans lequel
la grande valeur présente dans un espace numérique supérieur au premier paramètre d'état ou des valeurs dans un espace numérique continu ; dans lequel le procédé est en outre **caractérisé par** le biais des étapes suivantes :
- réception d'un résultat de mesure d'au moins une mesure au niveau du système (1) ;
- détermination en fonction du résultat de mesure d'une valeur actuelle pour le second paramètre d'état ; dans lequel
la valeur actuelle est déterminée directement ou indirectement à partir du résultat de mesure ;
- détermination d'une valeur caractéristique d'évaluation en fonction de la valeur actuelle pour le second paramètre d'état et en fonction d'une première valeur critique prédéfinie des N valeurs discrètes pour le premier paramètre d'état par le biais d'une analyse d'une fonction d'évaluation ; dans lequel
la fonction d'évaluation met en relation le second paramètre d'état avec la première valeur critique pour le premier paramètre d'état.

2. Procédé mis en œuvre par ordinateur selon la revendication 1, dans lequel la première valeur critique correspond à un état du système (1) dans lequel le système (1) ne peut pas remplir une exigence de puissance prédéfinie et/ou une exigence de fiabilité prédéfinie et/ou une exigence de sécurité prédéfinie et/ou une exigence de disponibilité prédéfinie.

3. Procédé mis en œuvre par ordinateur selon l'une quelconque des revendications précédentes, dans lequel
- en fonction de la première valeur critique une seconde valeur critique est déterminée pour le second paramètre d'état ; et
- la valeur caractéristique d'évaluation est déterminée en fonction d'un écart entre la valeur actuelle pour le second paramètre d'état et la seconde valeur critique.

4. Procédé mis en œuvre par ordinateur selon la revendication 3, dans lequel le premier paramètre d'état prend exactement la première valeur critique lorsque le second paramètre d'état est inférieur ou égal à la seconde valeur critique.

5. Procédé mis en œuvre par ordinateur selon l'une quelconque des revendications précédentes, dans lequel le second paramètre d'état quantifie une capacité de puissance du système (1), dans lequel plus la capacité de puissance du système (1) est élevée, plus le second paramètre d'état est élevé.

6. Procédé mis en œuvre par ordinateur selon l'une quelconque des revendications précédentes, dans lequel en fonction de la valeur caractéristique d'évaluation une prévision est exécutée pour le premier paramètre d'état.

7. Procédé mis en œuvre par ordinateur selon la revendication 6, dans lequel
- une évolution temporelle de la valeur caractéristique d'évaluation est déterminée en exécutant de manière répétée les étapes de la réception du résultat de mesure, de la détermination de la valeur actuelle pour le second paramètre d'état et de la détermination de la valeur caractéristique d'évaluation pendant une période d'évaluation ; et
- la prévision pour le premier paramètre d'état est exécutée en fonction de l'évolution temporelle de la valeur caractéristique d'évaluation.

8. Procédé mis en œuvre par ordinateur selon l'une quelconque des revendications précédentes, dans lequel en fonction de la valeur caractéristique d'évaluation une probabilité est calculée pour qu'une valeur actuelle du premier paramètre d'état corresponde à la première valeur critique.

9. Procédé mis en œuvre par ordinateur selon l'une quelconque des revendications précédentes, dans lequel en fonction de la grandeur caractéristique d'évaluation une probabilité est calculée pour que le premier paramètre d'état prenne la première valeur critique au sein d'une période future prédéfinie.

10. Procédé mis en œuvre par ordinateur selon l'une quelconque des revendications précédentes, dans lequel en fonction de la grandeur caractéristique d'évaluation un moment auquel le premier paramètre d'état prendra probablement la première valeur critique est estimé.

11. Procédé destiné à l'évaluation de l'état d'un système technique (1), dans lequel un procédé mis en œuvre par ordinateur selon l'une quelconque des revendications précédentes est exécuté et dans lequel le résultat de mesure est généré en exécutant l'au moins une mesure au niveau du système (1).

12. Procédé selon la revendication 11, dans lequel l'au moins une mesure est exécutée au moyen d'un système de mesure (1) de manière entièrement automatique selon un protocole de mesure prédéfini.

13. Dispositif d'évaluation d'état (2) destiné à une évaluation de l'état d'un système technique (1) qui est caractérisable par le biais d'un premier paramètre d'état prédéfini et qui est caractérisable par le biais d'un second paramètre d'état prédéfini, dans lequel le dispositif d'évaluation d'état (2) est conçu pour réaliser le procédé selon la revendication 1.

14. Dispositif d'évaluation d'état (2) selon la revendication 13, présentant un système de mesure (4) qui est conçu pour exécuter l'au moins une mesure au niveau du système (1).

15. Produit de programme informatique avec des instructions qui
- lors de la réalisation par le biais d'un système informatique amènent le système informatique à exécuter un procédé mis en œuvre par ordinateur selon l'une quelconque des revendications 1 à 10 ; et/ou
- lors de la réalisation par le biais d'un dispositif d'évaluation d'état (2) selon la revendication 14 amènent le dispositif d'évaluation d'état (2) à exécuter un procédé selon l'une quelconque des revendications 11 ou 12.
